(19) Europäisches Patentamt
European Patent Office
Office européen des brevets

(11) **EP 3 883 020 A1**

(12) **EUROPEAN PATENT APPLICATION**
published in accordance with Art. 153(4) EPC

(43) Date of publication:
**22.09.2021 Bulletin 2021/38**

(21) Application number: **20866933.3**

(22) Date of filing: **23.03.2020**

(51) Int Cl.:
***H01M 4/36*** *(2006.01)*          ***H01M 4/525*** *(2010.01)*

(86) International application number:
**PCT/CN2020/080693**

(87) International publication number:
**WO 2021/147165 (29.07.2021 Gazette 2021/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.01.2020 CN 202010071383**

(71) Applicant: **Ningde Amperex Technology Limited Ningde City, Fujian Province, 352100 (CN)**

(72) Inventors:
• **LANG, Ye**
  **Ningde City**
  **Fujian 352100 (CN)**

• **LIU, Wenyuan**
  **Ningde City**
  **Fuijan 352100 (CN)**
• **PENG, Gang**
  **Ningde City**
  **Fuijan 352100 (CN)**
• **XU, Leimin**
  **Ningde City**
  **Fuijan 352100 (CN)**

(74) Representative: **Icosa**
  **83 avenue Denfert-Rochereau**
  **75014 Paris (FR)**

(54) **POSITIVE ELECTRODE MATERIAL, ELECTROCHEMICAL DEVICE COMPRISING SAME, AND ELECTRONIC DEVICE**

(57)     The present application relates to a cathode material, and an electrochemical device and an electronic device including the same. The cathode material is a mixed material, and includes a lithium cobalt oxide and a lithium and nickel composite oxide, wherein the volume distribution curve of particles of the cathode material meets the following conditions: the volume distribution curve of the particles of the cathode material includes a first peak and a second peak, and the particle size value at the first peak is greater than the particle size value at the second peak, wherein the ratio of a peak value of the first peak to a full width at half maximum of the first peak is 1 mm$^{-1}$ to 4 mm$^{-1}$, and the ratio of a peak value of the second peak to a full width at half maximum of the second peak is 6 mm$^{-1}$ to 10 mm$^{-1}$. By using a cathode active material meeting the above particle distribution conditions, the compacted density of a cathode can be effectively increased, and the energy density of the electrochemical device can be improved. Additionally, during a preparation process of the cathode material of the present application, micro powder generated through sintering can be effectively reduced. The cathode material and the electrochemical device of the present application have the advantages of high energy density and cycle stability.

FIG. 1

EP 3 883 020 A1

**Description**

**BACKGROUND**

**1. Technical Field**

The present application relates to the technical field of energy storage, and in particular to a cathode material, and an electrochemical device and an electronic device including the same,.

**2. Description of the Prior Art**

With the rapid development of the mobile electronic technology, the frequency and experience requirements of people for using mobile electronic devices such as mobile phones, tablets, notebook computers, drones, and the like are increasing. Therefore, electrochemical devices (such as lithium-ion batteries) for providing power to the electronic devices need to show a higher energy density, a greater rate, higher safety and less capacity fading after repeated charge-discharge processes.
The energy density and cycle efficiency of the electrochemical device are closely related to the cathode material of the electrochemical device. Therefore, further research and improvement on the cathode material have been continuously carried out. Besides seeking for a novel cathode material, improvement and optimization on material composition of the cathode material are also an important solution.

**SUMMARY**

The present application provides a cathode material, an electrochemical device including the cathode material, and an electronic device to try to solve at least one problem in the related art at least to a certain degree.
According to one aspect of the present application, the present application provides a cathode material, including a lithium cobalt oxide and a lithium and nickel composite oxide, wherein the volume distribution curve of particles of the cathode material meets the following conditions: the volume distribution curve of the particles of the cathode material includes a first peak and a second peak, and the particle size value at the first peak is greater than the particle size value at the second peak, wherein the ratio of a peak value of the first peak to a full width at half maximum of the first peak is about 1 mm$^{-1}$ to about 4 mm$^{-1}$, and the ratio of a peak value of the second peak to a full width at half maximum of the second peak is about 6 mm$^{-1}$ to about 10 mm$^{-1}$.
According to another aspect of the present application, the present application provides an electrochemical device, including an anode, a separator and a cathode, wherein the cathode includes the cathode material.
According to further another aspect of the present application, the present application provides an electronic device, including the electrochemical device.
Additional aspects and advantages of the embodiments of the present application will be described or shown in the following description or interpreted by implementing the embodiments of the present application.

Brief description of the drawings

Drawings necessary to describe the embodiments of the present application or the prior art will be briefly illustrated so as to facilitate the description of the embodiments of the present application. Obviously, the accompanying drawings described below only show some embodiments of the present application. For those skilled in the art, the drawings of other embodiments can still be obtained according to the structures illustrated in the drawings without any creative effort.

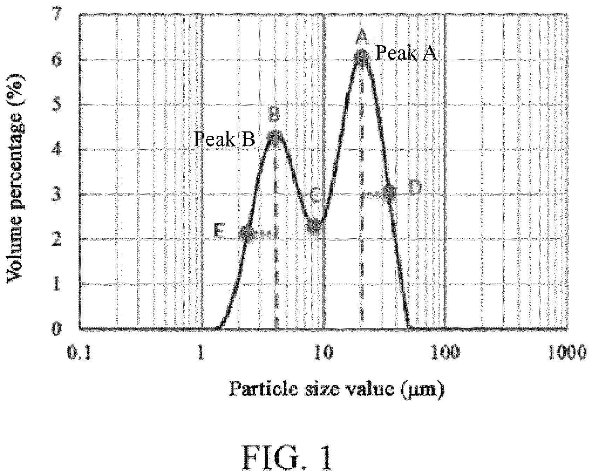

FIG. 1 is the volume distribution curve diagram of particles of a cathode material according to embodiment 1 of the present application.

Detailed Description

The embodiments of the present application will be described in detail below. Throughout the specification, the same or similar components and components having the same or similar functions are denoted by similar reference numerals. The embodiments described herein with respect to the drawings are illustrative and graphical, and are used for providing a basic understanding of the present application. The embodiments of the present application should not be interpreted as limitations to the present application.
In addition, sometimes, a quantity, a ratio, and another value are presented in a range format in the present application. It should be appreciated that such range formats are for convenience and conciseness, and should be flexibly understood as including not only values explicitly specified to range constraints, but also all individual values or sub-ranges within the ranges, like explicitly specifying each value and each sub-range.

In the detailed description and the claims, a list of items connected by the term "at least one of" or similar terms may mean any combination of the listed items. For example, if items A and B are listed, then the phrase "at least one of A and B" means only A; only B; or A and B. In another example, if items A, B and C are listed, then the phrase "at least one of A, B and C" means only A; or only B; only C; A and B (excluding C); A and C (excluding B); B and C (excluding A); or all of A, B and C. The item A may include a single component or multiple components. The item B may include a single component or multiple components. The item C may include a single component or multiple components.

The present application mixes a lithium cobalt oxide and a lithium and nickel composite oxide according to a certain particle ratio, and gaps of big particles are filled with small particles, so that the compacted density of a cathode material in an electrochemical device is effectively improved.

The lithium cobalt oxide and the lithium and nickel composite oxide are both formed through mixing precursors of a transition metal oxide and lithium salts and performing high-temperature sintering. After sintering, particles of the cathode material seriously agglomerate, and crushing is needed for forming the cathode material into small particles. However, the crushing may bring a large amount of micro powder to the cathode material, and an excessive particle distribution range of the cathode material is further caused. After particle distribution of the cathode material is as wide as a certain degree, the specific surface area of the material will rapidly increase, so that the compacted density is reduced slightly. Additionally, the micro powder also intensifies the reaction between the cathode material and an electrolytic solution, a gas byproduct is easy to produce, and fading speed acceleration of a battery capacity in a cycle process is caused. Therefore, particle distribution in the cathode material prepared by mixing the lithium cobalt oxide and the lithium and nickel composite oxide needs to be further controlled.

According to one aspect of the present application, an embodiment of the present application provides a cathode material prepared by mixing a lithium cobalt oxide and a lithium and nickel composite oxide (such as a lithium nickel cobalt manganese oxide). By optimizing and regulating the particle proportional relationship of the cathode material, the cathode material realizes an ultrahigh energy density and excellent cycle stability.

In an embodiment of the present application, the present application provides a cathode material, including a lithium cobalt oxide and a lithium and nickel composite oxide. A volume distribution curve of particles of the cathode material obtained after laser particle size analysis meets the following conditions: the volume distribution curve of the particles of the cathode material includes a first peak and a second peak, and the particle size value at the first peak is greater than the particle size value at the second peak, wherein the ratio of a peak value of the first peak to a full width at half maximum of the first peak is about 1 mm$^{-1}$ to about 4 mm$^{-1}$, and the ratio of a peak value of the second peak to a full width at half maximum of the second peak is about 6 mm$^{-1}$ to about 10 mm$^{-1}$

FIG. 1 is a volume distribution curve diagram of particles of a cathode material according to embodiment 1 of the present application.

As shown in FIG. 1, the volume distribution curve of particles obtained after laser particle size analysis is performed on the cathode material prepared by mixing a lithium cobalt oxide and a lithium and nickel composite oxide may show two peaks, wherein the peak with a peak crest corresponding to a higher particle size value $x_A$ in the curve diagram is a first peak, the other peak with a peak crest corresponding to a lower particle size value $x_B$ in the curve diagram is a second peak, the peak value of the first peak is a volume distribution value $y_A$ of its peak crest A ($x_A$, $y_A$), and the peak value of the second peak is a volume distribution value $y_B$ of its peak crest B ($x_B$, $y_B$). Calculation methods of a full width at half maximum of the first peak and a full width at half maximum of the second peak are shown in Formula 1 and Formula 2 below:

$$\text{the full width at half maximum of the first peak} = 2(x_D - x_A), \quad \text{(Formula 1)},$$

and

$$\text{the full width at half maximum of the second peak} = 2(x_B - x_E), \quad \text{(Formula 2)}$$

wherein $x_D$ is a particle size value of a half peak position D ($x_D$, $y_D$) at the outer side of the first peak corresponding to the half peak value 0.5$y_A$ of the first peak, and $x_E$ is a particle size value of a half peak position E ($x_E$, $y_E$) at the inner side of the second peak corresponding to the half peak value 0.5$y_B$ of the second peak.

The greater ratio of the peak value of the first peak to the full width at half maximum of the first peak and the greater ratio of the peak value of the second peak to the full width at half maximum of the second peak show denser and more concentrated particle diameter distribution of the particles. If the value is too small, the particle diameter distribution of the particles is wider, micro powder and super big particles may be generated, the compacted density reduction of the cathode material is further caused, and cycle performance of an electrochemical device is reduced. If the value is too high, the particle distribution is too dense, and the compacted density may be reduced to a certain degree. According to the particle distribution of the cathode material of the present application, the gaps between big particles can be filled with the small-particle cathode material, and super big particles and micro powder are removed, so that the compacted density is improved.

In some other embodiments, the ratio of the peak value of the first peak to the full width at half maximum of the first peak is about 2 mm$^{-1}$ to about 3 mm$^{-1}$, and the ratio of the peak value of the second peak to the full width at half maximum of the second peak is about 7 mm$^{-1}$ to about 9 mm$^{-1}$

In some embodiments, the ratio of a valley value yc of a peak valley C (xc, yc) between the first peak and the second peak to the peak value $y_B$ of the second peak is about 0.1 to 0.9. The ratio can show the particle distribution relationship of the lithium cobalt oxide and the lithium and nickel composite oxide, a too high or too low ratio shows that the particle distribution of the lithium cobalt oxide and the lithium and nickel composite oxide is excessively overlapped or alienated, so that the gaps between big particles may not be effectively filled by the small-particle cathode material. The compacted density of the cathode material may be further improved through the ratio range of yc and $y_B$ of the cathode material of the present application. In some other embodiments, the ratio of yc to $y_B$ is about 0.4 to about 0.6.

In some embodiments, DnIO of the cathode material is about 1 $\mu$m to 15 $\mu$m, and DnIO represents a particle diameter reaching the cumulative quantity of 10% from the small-particle-diameter side in quantity basis particle size distribution.

In some embodiments of the present application, the cathode material further includes a strontium element (Sr), wherein Sr is favorable for promoting particle and unit cell volume increase of the cathode material, achieves a certain fluxing effect in a sintering process, and may enable the particle distribution of the cathode material to be more concentrated. After Sr is added, a material may be synthesized at a lower temperature, so that the agglomeration degree of the sintered material is lower, and micro powder generated through crushing is less. In some embodiments, the weight of Sr in the cathode material is about 1% to about 6% based on the total weight of the cathode material.

In some embodiments of the present application, the lithium cobalt oxide is at least one of compounds expressed by a general formula $Li_xCo_yM1_zSr_aO_2$, wherein $0.95 \leq x \leq 1.05$, $0.9 \leq y < 1$, $0 \leq z \leq 0.1$, $0.02 \leq a \leq 0.1$, and $y+z+a=1$. Additionally, M1 is an element selected from the group consisting of Sc, V, Cr, Mn, Fe, Cu, Zn, Y, Zr, Nb, Mo, Tc, Ru, Rh, Pd, Ag, Cd, La, Ce, Pr, Nd, Pm, Sm, Eu, Gd, Tb, Dy, Ho, Er, Tm, Yb, Lu, Al, Mg, Ti, Zr and combinations thereof.

In some embodiments, the lithium and nickel composite oxide is at least one of compounds expressed by a general formula $Li_uNi_vM2_wN_bSr_cO_2$, wherein $0.95 \leq u \leq 1.05$, $0.3 \leq v < 1$, $0 < w \leq 0.5$, $0 \leq b \leq 0.1$, $0.01 \leq c \leq 0.04$, and $v+w+b+c=1$. M2 is an element selected from the group consisting of Co, Mn, Sc, Al, V, Cr, Fe, Cu, Zn, Y, Zr, Nb, Mo, Tc, Ru, Rh, Pd, Ag, Cd, La, Ce, Pr, Nd, Pm, Sm, Eu, Gd, Tb, Dy, Ho, Er, Tm, Yb, Lu and combinations thereof. N is an element selected from the group consisting of Mg, Ti, Zr and combinations thereof. The lithium and nickel composite oxide is a single-crystal material containing high-proportion Ni, the self particle distribution is concentrated, a particle size is greater, the high capacity of a lithium-ion battery is ensured, and meanwhile, cycle stability of the material is further ensured.

In some embodiments, the particle size Dv50 of the lithium cobalt oxide is about 8 $\mu$m to about 20 $\mu$m. In some other embodiments, the particle size Dv50 of the lithium cobalt oxide is about 12 $\mu$m to about 15 $\mu$m.

In some embodiments, the particle size Dv50 of the lithium and nickel composite oxide is about 3 $\mu$m to about 18 $\mu$m. In some other embodiments, the particle size Dv50 of the lithium and nickel composite oxide is about 4 $\mu$m to about 10 $\mu$m.

In some embodiments, the particle size Dv50 of the cathode material is about 2 $\mu$m to about 16 $\mu$m. In some other embodiments, the particle size Dv50 of the cathode material is about 3 $\mu$m to about 9 $\mu$m.

In some embodiments, the molar content of Sr in the lithium cobalt oxide is greater than the molar content of Sr in the lithium and nickel composite oxide. The sintering temperature of the lithium cobalt oxide is higher than that of the lithium and nickel composite oxide. Sr with a high molar content may promote growth of crystal grains so as to reduce micro powder.

In some embodiments, the weight ratio of the lithium cobalt oxide to the lithium and nickel composite oxide in the cathode material is about 4:6 to about 8:2.

In some embodiments, the specific surface area of the cathode material is about 0.4 m$^2$/g to about 0.8 m$^2$/g. The specific surface area of the cathode material of the embodiment of the present application enables a cathode to maintain a certain compacted density and rate performance, so that the cycle performance of the electrochemical device is improved. In some other embodiments, the specific surface area of the cathode material is about 0.5 m$^2$/g to about 0.6 m$^2$/g.

In some embodiments, the particles of the cathode material further include a coating layer, and the coating layer includes at least one element of B, Al, Zr, C and S.

In some embodiments, a preparation method of the cathode material of the present application includes the following steps:

1. Preparation of lithium cobalt oxide:
A certain number of cobalt oxide precursors are taken, and are mixed with a lithium salt and a doping material (except for Sr) according to a substrate stoichiometric ratio to perform primary sintering. After the primary sintering, a primary sintering product and an Sr doping material are mixed according to the substrate stoichiometric ratio to perform secondary sintering, wherein the temperature of the secondary sintering is about 850°C to about 950°C, the heat treatment period is about 14 h to about 18 h, and dry gas is introduced in the heat treatment period of the secondary sintering. After the secondary sintering, a secondary sintering product is subjected to crushing and grading treatment to obtain the lithium cobalt oxide.

2. Preparation of lithium and nickel composite oxide:
A certain proportion of nickel cobalt manganese material precursors are prepared, and are mixed with a lithium slat and a doping material (including Sr) according to a substrate stoichiometric ratio to perform sintering, wherein the sintering temperature is about 750°C to about 830°C, and the heat treatment time is about 16 h to about 20 h. After the sintering, a sintering product is subjected to crushing and grading treatment to obtain the lithium and nickel composite oxide.

3. Mixing:
The lithium cobalt oxide and the lithium nickel cobalt manganese oxide are uniformly mixed according to a certain weight ratio to obtain a cathode material.

It should be understood that the steps in the preparation method of the cathode material according to embodiments of the present application can be selected or can be replaced with other conventional treatment methods in the art according to specific requirements without departing from the spirit of the present application and without being limited thereto.

According to another aspect of the present application, some embodiments of the present application further provide an electrochemical device including the cathode material of the present application. In some embodiments, the electrochemical device is a lithium-ion battery. The lithium-ion battery includes an anode, a separator and a cathode. The separator is arranged between the cathode and the anode, wherein the cathode includes the cathode material in the above embodiments and a cathode current collector.

In some embodiments, the cathode current collector may be an aluminum foil or a nickel foil, and an anode current collector may be a copper foil or a nickel foil. However, other common cathode current collectors or anode current collectors used in the art may be used without being limited thereto.

In some embodiments, an anode includes an anode material capable of absorbing and releasing lithium (Li) (sometimes also referred to as "anode material capable of absorbing/releasing Li" hereafter). An example of the anode material capable of absorbing/releasing Li may include a carbon material, a metal compound, an oxide, a sulfide, a lithium nitride such as $LiN_3$, a lithium metal, a metal forming an alloy with lithium, and a polymer material.

In some embodiments, each of the cathode and the anode may respectively and independently further include at least one of an adhesive and a conductive agent.

In some embodiments, the additive includes at least one of polyvinylidene fluoride, vinylidene fluoride-hexafluoropropylene copolymers, polyamide, polyacrylonitrile, polyacrylic ester, polyacrylic acid, polyacrylate, sodium carboxymethylcellulose, polyvinylpyrrolidone, polyvinyl ether, polymethyl methacrylate, polytetrafluoroethylene, polyhexafluoropropylene and butadiene styrene rubber. In some embodiments, the conductive agent includes at least one of carbon nanotubes, carbon fiber, conductive carbon black, acetylene black, graphene and Ketjen black. It should be understood that those skilled in the art can select conventional adhesives and conductive agents in the art according to practical requirements without being limited thereto.

In some embodiments, the separator includes, but is not limited to, at least one of polyethylene, polypropylene, polyethylene glycol terephthalate, polyimide and aramid fiber. For example, the polyethylene includes at least one ingredient selected from high-density polyethylene, low-density polyethylene and ultrahigh-molecular-weight polyethylene. Particularly the polyethylene and the polypropylene have a good effect on short circuit prevention, and stability of the lithium-ion battery may be improved through a shutdown effect.

The lithium-ion battery of the present application further includes an electrolyte, the electrolyte may be one or more of a gel electrolyte, a solid electrolyte and an electrolytic solution, and the electrolytic solution includes a lithium salt and a non-aqueous solvent.

In some embodiments, the lithium salt is selected from one or more of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB and lithium difluoroborate. For example, $LiPF_6$ is selected as the lithium salt, because $LiPF_6$ may provide high ion conductivity and may improve cycle characteristics.

The non-aqueous solvent may be a carbonate compound, a carboxylate compound, an ether compound, other organic solvents or a combination thereof.

The above carbonate compound may be a chain carbonate compound, a cyclic carbonate compound, a fluorocarbonate compound, or a combination thereof.

Examples of other organic solvents are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate and a combination thereof.

In some embodiments, the non-aqueous solvent is selected from the group consisting of ethylene carbonate, propylene carbonate, diethyl carbonate, dimethyl carbonate, ethyl methyl carbonate, propylene carbonate, methyl acetate, ethyl propionate, propyl propionate and a combination thereof.

It should be understood that the preparation methods of the cathode, the anode, the separator and the lithium-ion battery in the embodiments of the present application can select any proper conventional methods in the art according to specific requirements without departing from the spirit of the present application and without being limited thereto. In an implementation scheme of a method for manufacturing an electrochemical device, the preparation method of the lithium-ion battery includes: sequentially winding, folding or stacking the cathode, the separator and the anode in the above embodiment into an electrode assembly, then charging the electrode assembly into an aluminum plastic film, injecting an electrolytic solution, and then implementing work procedures of vacuum packaging, still standing, formation, shaping and the like to obtain the lithium-ion battery.

Although the lithium-ion battery is taken above as an example for illustration, after reading the present application, those skilled in the art can conceive of applying the cathode material of the present application to any other suitable electrochemical devices. Such electrochemical devices include any device for electrochemical reaction, and specific examples thereof include all kinds of primary batteries, secondary batteries, fuel cells, solar cells or capacitors. Particularly, the electrochemical device is a lithium secondary battery, including a lithium metal secondary battery, a lithium-ion secondary battery, a lithium polymer secondary battery or a lithium-ion polymer secondary battery.

Some embodiments of the present application further provide an electronic device, including the electrochemical device in the embodiments of the present application.

The electronic device of the embodiments of the present application is not particularly limited, and may be any electronic device known in the prior art. In some embodiments, the electronic device may include, but is not limited to, a notebook computer, a pen input computer, a mobile computer, an e-book player, a portable phone, a portable fax machine, a portable copy machine, a portable printer, stereo headphones, a video recorder, a liquid crystal display television, a portable cleaner, a portable CD player, a mini disk, a transceiver, an electronic notebook, a calculator, a memory card, a portable recorder, a radio, a backup power supply, a motor, a car, a motorcycle, a power bicycle, a bicycle, a lighting appliance, a toy, a game console, a clock, an electric tool, a flash lamp, a camera, a large household storage battery, a lithium-ion capacitor and the like.

**Specific Embodiments**

Some specific embodiments and comparative examples are listed below, laser particle size analysis is respectively performed on cathode materials, and a limiting compacted density test, a cycle performance test and a storage expansion rate test are performed on electrochemical devices (lithium-ion batteries) to better illustrate the technical solutions of the present application.

**1. Test method**

**1.1 Laser particle size analysis:**

The laser particle size test is used for testing particle distribution according to a principle that particles in different sizes may enable laser to be scattered at different intensities. Main indexes for expressing particle characteristics include Dn10, Dv10, Dv50, Dv90, Dv99, etc., wherein Dv50 is referred to as a particle size, and represents a particle diameter reaching the cumulative volume of 50% from the small-particle-diameter side in volume basis particle distribution; and DnIO represents a particle diameter reaching the cumulative quantity of 10% from the small-particle-diameter side in quantity basis particle distribution. The embodiments and comparative examples of the present application used a Mastersizer 2000 laser particle size distribution test instrument to analyze the particle size of particles of a sample: a sample of a cathode material was dispersed into 100 mL of a dispersing agent (deionized water) so that a light shading degree reached 8 to 12%; then, ultrasonic treatment was performed on the sample at an ultrasonic intensity of 40 KHz and 180 W for 5 min; and after the ultrasonic treatment, the sample was subjected to laser particle size distribution analysis to obtain particle size distribution data.

**1.2 Limiting compacted density test:**

After lithium-ion batteries of the embodiments and comparative examples below were dismounted, cathodes were taken out, and corresponding cathode compacted densities when the cathodes were pressed to be doubled and light-tight were recorded. The doubled and light-tight conditions included: the cathodes to be tested were aligned with an incandescent lamp light source, a straight line formed by the eyes and the light source formed a 90° angle with cathode folding marks, and no light spot could be seen.

### 1.3 Cycle performance test:

The lithium-ion batteries of the embodiments and comparative examples below were put into a constant-temperature cabinet being 45°C+/-2°C for still standing for 2 h, subjected to 1.5 C constant-current charging to 4.25 V, then subjected to 4.25 V constant-voltage charging to 0.02 C and still standing for 15 min, and next subjected to 4.0 C constant-current discharging to 2.8 V, this was an once charge-discharge cycle process, and discharging capacities of the lithium-ion batteries of a first cycle were recorded. Then, 500 times of charge-discharge cycle processes were repeatedly performed according to the above method, and the discharging capacities after the 500 times of cycles were recorded.

Four lithium-ion batteries were taken for testing in each group, and an average value of capacity maintaining rates of the lithium-ion batteries was calculated. The capacity maintaining rate of 500 times of cycles of the lithium-ion battery=discharging capacity (mAh) of the 500$^{th}$ cycle/discharging capacity (mAh) after the first cycle* 100%.

### 1.4 Storage expansion rate test:

The lithium-ion batteries of the embodiments and comparative examples below were put into a constant-temperature cabinet being 25°C+/-2°C for still standing for 2 h, subjected to 1.5 C constant-current charging to 4.25 V, and then subjected to 4.25 V constant-voltage charging to 0.05 C, next, the lithium-ion batteries were stored in a constant-temperature cabinet being 85°C+/-2°C for 12 h, and a high-temperature storage expansion rate of the lithium-ion batteries was calculated after high-temperature storage.

The high-temperature storage expansion rate=(thickness of the lithium-ion battery after high-temperature storage/thickness of a fresh lithium-ion battery-1)* 100%.

### 2. Preparation method

### 2.1 Preparation of cathodes

The cathode materials of the embodiments and comparative examples below, acetylene black and polyvinylidene fluoride were dissolved into an N-methyl pyrrolidone (NMP) solution according to a proportion of 94:3:3 to form cathode slurry. Aluminum foils were used as cathode current collectors, and the cathode slurry was applied on the cathode current collectors to obtain the cathodes through procedures of drying, cold pressing and cutting.

### 2.2 Preparation of anodes

Artificial graphite, acetylene black, butadiene styrene rubber and sodium carboxymethylcellulose were dissolved into deionized water according to a proportion of 96:1:1.5:1.5 to form anode slurry. Copper foils were used as anode current collectors, and the anode slurry was applied onto the anode current collectors to obtain the anodes through procedures of drying, cold pressing and cutting.

### 2.3 Preparation of separators

The polyvinylidene fluoride was dissolved into water to form uniform slurry through mechanical stirring, the slurry was applied to two side surfaces of coated porous substrates (polyethylene) with ceramic coatings at two sides to form the separators after drying.

### 2.4 Preparation of an electrolytic solution

In an environment with a water content lower than 10 ppm, lithium hexafluorophosphate and a non-aqueous organic solvent (ethylene carbonate (EC): diethyl carbonate (DEC): propylene carbonate (PC): propyl propionate (PP): vinylene carbonate (VC)=20:30:20:28:2, weight ratio) were prepared according to a weight ratio of 8:92 to form the electrolytic solution.

### 2.5 Preparation of the lithium-ion battery

The cathode, the separator and the anode were sequentially stacked, so that the separator was positioned between the cathode and the anode to achieve an isolation effect; and then, the structure was wound into an electrode assembly. Next, the electrode assembly was charged into an aluminum plastic film packaging bag, and water was removed at 80°C to obtain a dry electrode assembly. Then, the electrolytic solution was injected into the dry electrode assembly, and through work procedures of vacuum packaging, still standing, formation, shaping and the like, preparation of the lithium-ion battery in each of the following embodiments and comparative examples was completed.

Embodiment 1

$Co_3O_4$ precursors with Dv50 being 14 $\mu$m and Span (Span=(Dv90-Dv10)/Dv50) being 1.2 were selected, and were mixed with LiOH and MgO according to the stoichiometric ratio of $LiCo_{0.93}Mg_{0.02}Sr_{0.05}O_2$; the mixture was subjected to primary sintering at 550°C; a heat treatment period was 12 h; in the heat treatment process, dry air was continuously introduced; after the heat treatment was completed, furnace cooling was performed to reach a room temperature. A material obtained after the primary sintering was mixed with $Sr(OH)_2\cdot 8H_2O$ according to the stoichiometric ratio of $LiCo_{0.93}Mg_{0.02}Sr_{0.05}O_2$; the mixture was subjected to secondary sintering at 900°C; a heat treatment period was 15 h; and a lithium cobalt oxide was obtained through crushing treatment.

$Ni_{0.5}Co_{0.2}Mn_{0.3}(OH)_2$ precursors with Dv50 being 4 $\mu$m and Span being 1.2 were selected, and were mixed with LiOH, $Al_2O_3$ and $Sr(OH)_2\cdot 8H_2O$ according to a proportion of $LiNi_{0.5}Co_{0.2}Mn_{0.24}Al_{0.02}Sr_{0.04}O_2$; and the mixture was calcined for 18 h at 780°C to obtain a lithium and nickel composite oxide through crushing treatment.

The lithium cobalt oxide and the lithium and nickel composite oxide were uniformly mixed according to a weight ratio of 7:3 to obtain a cathode material.

Embodiment 2

A preparation mode was identical to that of embodiment 1. The difference was that the preparation process of a lithium cobalt oxide in embodiment 2 was that: $Co_3O_4$ precursors with Dv50 being 14 $\mu$m and Span being 1.4 were selected, and were mixed with LiOH and MgO according to a stoichiometric ratio of $LiCo_{0.96}Mg_{0.02}Sr_{0.02}O_2$; the mixture was subjected to primary sintering at 560°C; a heat treatment period was 14 h; in the heat treatment process, dry gas was continuously introduced; after the heat treatment was completed, furnace cooling was performed to reach a room temperature. A material obtained after the primary sintering was mixed with $Sr(OH)_2\cdot 8H_2O$ according to the stoichiometric ratio of $LiCo_{0.96}Mg_{0.02}Sr_{0.02}O_2$; the mixture was subjected to secondary sintering at 950°C; a heat treatment period was 17 h; and the lithium cobalt oxide was obtained through crushing treatment.

Embodiment 3

A preparation mode was identical to that of embodiment 1. The difference was that the preparation process of a lithium cobalt oxide in embodiment 3 was that: $Co_3O_4$ precursors with Dv50 being 14 $\mu$m and Span being 1.3 were selected, and were mixed with LiOH and MgO according to a stoichiometric ratio of $LiCo_{0.95}Mg_{0.02}Sr_{0.03}O_2$; the mixture was subjected to primary sintering at 550°C; a heat treatment period was 13 h; in the heat treatment process, dry gas was continuously introduced; after the heat treatment was completed, furnace cooling was performed to reach a room temperature. A material obtained after the primary sintering was mixed with $Sr(OH)_2\cdot 8H_2O$ according to the stoichiometric ratio of $LiCo_{0.95}Mg_{0.02}Sr_{0.03}O_2$; the mixture was subjected to secondary sintering at 920°C; a heat treatment period was 16 h; and the lithium cobalt oxide was obtained through crushing treatment.

Embodiment 4

A preparation mode was identical to that of embodiment 1. The difference was that the preparation process of a lithium cobalt oxide in embodiment 4 was that: $Co_3O_4$ precursors with Dv50 being 14 $\mu$m and Span being 1.1 were selected, and were mixed with LiOH and MgO according to a stoichiometric ratio of $LiCo_{0.92}Mg_{0.02}Sr_{0.06}O_2$; the mixture was subjected to primary sintering at 520°C; a heat treatment period was 12 h; in the heat treatment process, dry gas was continuously introduced; after the heat treatment was completed, furnace cooling was performed to reach a room temperature. A material obtained after the primary sintering was mixed with $Sr(OH)_2\cdot 8H_2O$ according to the stoichiometric ratio of $LiCo_{0.92}Mg_{0.02}Sr_{0.06}O_2$; the mixture was subjected to secondary sintering at 870°C; a heat treatment period was 14 h; and the lithium cobalt oxide was obtained through crushing treatment.

Embodiment 5

A preparation mode was identical to that of embodiment 1. The difference was that the preparation process of a lithium and nickel composite oxide in embodiment 5 was that: $Ni_{0.5}Co_{0.2}Mn_{0.3}(OH)_2$ precursors with Dv50 being 4 $\mu$m

and Span being 1.4 were selected, and were mixed with LiOH, $Al_2O_3$ and $Sr(OH)_2 \cdot 8H_2O$ according to a proportion of $LiNi_{0.5}Co_{0.2}Mn_{0.26}Al_{0.02}Sr_{0.02}O_2$; and the mixture was calcined for 20 h at 820°C to obtain the lithium and nickel composite oxide through crushing treatment.

Embodiment 6

A preparation mode was identical to that of embodiment 1. The difference was that the preparation process of a lithium and nickel composite oxide in embodiment 6 was that: $Ni_{0.5}Co_{0.2}Mn_{0.3}(OH)_2$ precursors with Dv50 being 4 $\mu$m and Span being 1.0 were selected, and were mixed with LiOH, $Al_2O_3$ and $Sr(OH)_2 \cdot 8H_2O$ according to a proportion of $LiNi_{0.5}Co_{0.2}Mn_{0.23}Al_{0.02}Sr_{0.05}O_2$; and the mixture was calcined for 16 h at 760°C to obtain the lithium and nickel composite oxide through crushing treatment.

Embodiment 7

A preparation mode was identical to that of embodiment 1. The difference was that the mass ratio of the lithium cobalt oxide to the lithium and nickel composite oxide in embodiment 7 was changed into 8:2.

Embodiment 8

A preparation mode was identical to that of embodiment 1. The difference was that the mass ratio of the lithium cobalt oxide to the lithium and nickel composite oxide in embodiment 8 was changed into 6:4.

Embodiment 9

A preparation mode was identical to that of embodiment 1. The difference was that the mass ratio of the lithium cobalt oxide to the lithium and nickel composite oxide in embodiment 9 was changed into 5:5.

Embodiment 10

A preparation mode was identical to that of embodiment 1. The difference was that the mass ratio of the lithium cobalt oxide to the lithium and nickel composite oxide in embodiment 10 was changed into 4:6.

Embodiment 11

A preparation mode was identical to that of embodiment 1. The difference was that according to embodiment 11, after being obtained, the cathode material was uniformly mixed with boracic acid ($H_3BO_3$), sintering was performed for 4 h at 400°C for boron coating, wherein the molar content of boron is 0.3%.

Comparative example 1

$Co_3O_4$ precursors were taken and were mixed with LiOH and MgO according to a stoichiometric ratio of $LiCo_{0.98}Mg_{0.02}O_2$. The mixture was calcined for 10 h at 600°C, and then, the temperature was raised to 1000°C for calcination for 15 h. Dry air was continuously introduced in a heat treatment process. After the heat treatment was completed, furnace cooling was performed to a room temperature. A lithium cobalt oxide was obtained through crushing treatment.

$Ni_{0.5}Co_{0.2}Mn_{0.3}(OH)_2$ precursors were taken and were mixed with LiOH, $Al_2O_3$ and MgO according to a proportion of $LiNi_{0.5}Co_{0.2}Mn_{0.28}Mg_{0.02}O_2$, the mixture was calcined for 16 h at 850°C, and a lithium and nickel composite oxide is obtained through crushing treatment.

The lithium cobalt oxide and the lithium and nickel composite oxide were mixed according to the ratio of 1:1 to obtain a cathode material.

Comparative example 2

$Co_3O_4$ precursors were taken and were mixed with LiOH and MgO according to a stoichiometric ratio of $LiCo_{0.98}Mg_{0.02}O_2$. The mixture was calcined for 10 h at 600°C, and then, the temperature was raised to 1000°C for sintering for 15 h. Dry air was continuously introduced in a heat treatment process. After the heat treatment was completed, furnace cooling was performed to a room temperature. A lithium cobalt oxide was obtained through crushing treatment. The lithium cobalt oxide was used as a cathode material.

Comparative example 3

$Ni_{0.5}Co_{0.2}Mn_{0.3}(OH)_2$ precursors were taken and were mixed with LiOH, $Al_2O_3$ and MgO according to a proportion of $LiNi_{0.5}Co_{0.2}Mn_{0.28}Mg_{0.02}O_2$. The mixture was calcined for 16 h at 850°C, and a lithium and nickel composite oxide was obtained through crushing treatment. The lithium cobalt oxide was used as a cathode material.

The cathode materials of the above embodiments and comparative examples were subjected to laser particle size test, and test results were recorded. Then, fresh cathodes were prepared, and were subjected to thickness, width, length and weight measurement. Next, the lithium-ion batteries were subjected to limiting compacted density test, cycle performance test and storage expansion rate test, and test results were recorded.

Statistic values and results of the laser particle size test of the cathode materials in embodiments 1 to 11 and comparative examples 1 to 3 are shown in Table 1 below:

Table 1

| Embodiment/ comparative example | Mass ratio of lithium cobalt oxide to lithium and nickel composite oxide | Weight percentage of Sr in cathode material (%) | Lithium cobalt oxide Dv50 ($\mu$m) | Lithium and nickel composite oxide Dv50 ($\mu$m) | Cathode material Dn10 ($\mu$m) | Cathode material BET specific surface area (m$^2$/g) | Peak value of first peak/full width at half maximum of first peak | Peak value of second peak/full width at half maximum of second peak | Coating layer |
|---|---|---|---|---|---|---|---|---|---|
| Embodiment 1 | 7:3 | 4.0 | 15.6 | 5.5 | 1.5 | 0.544 | 3 | 8 | - |
| Embodiment 2 | 7:3 | 2.7 | 16.4 | 5.5 | 1.2 | 0.632 | 1 | 8 | - |
| Embodiment 3 | 7:3 | 3.1 | 16.1 | 5.5 | 1.4 | 0.579 | 2 | 8 | - |
| Embodiment 4 | 7:3 | 4.5 | 15.4 | 5.5 | 1.8 | 0.523 | 4 | 8 | - |
| Embodiment 5 | 7:3 | 3.1 | 15.6 | 5.9 | 1.3 | 0.582 | 3 | 6 | - |
| Embodiment 6 | 7:3 | 4.5 | 15.6 | 5.0 | 1.7 | 0.529 | 3 | 10 | - |
| Embodiment 7 | 8:2 | 4.0 | 15.6 | 5.5 | 1.7 | 0.504 | 3 | 9 | - |
| Embodiment 8 | 6:4 | 4.0 | 15.6 | 5.5 | 1.4 | 0.567 | 3 | 7 | - |
| Embodiment 9 | 5:5 | 4.0 | 15.6 | 5.5 | 1.2 | 0.602 | 4 | 7 | - |
| Embodiment 10 | 4:6 | 4.0 | 15.6 | 5.5 | 1.0 | 0.660 | 4 | 6 | - |
| Embodiment 11 | 7:3 | 4.0 | 15.7 | 5.6 | 1.6 | 0.489 | 3 | 9 | Boron coated |
| Comparative example 1 | 5:5 | - | 17.1 | 6.2 | 0.9 | 0.821 | 6 | 15 | - |
| Comparative example 2 | - | - | 17.1 | - | 1.0 | 0.788 | 6 | - | - |

EP 3 883 020 A1

11

(continued)

| Embodiment/ comparative example | Mass ratio of lithium cobalt oxide to lithium and nickel composite oxide | Weight percentage of Sr in cathode material (%) | Lithium cobalt oxide Dv50 (μm) | Lithium and nickel composite oxide Dv50 (μm) | Cathode material Dn10 (μm) | Cathode material BET specific surface area (m²/g) | Peak value of first peak/full width at half maximum of first peak | Peak value of second peak/full width at half maximum of second peak | Coating layer |
|---|---|---|---|---|---|---|---|---|---|
| Comparative example 3 | - | - | - | 6.2 | 0.8 | 0.726 | - | 15 | - |

The test results of the limiting compacted density test, the cycle performance test and the high-temperature storage expansion rate test of the lithium-ion batteries in embodiments 1 to 11 and comparative examples 1 to 3 are shown in Table 2 below:

**Table 2**

| Embodiment/comparative example | Limiting compacted density (g/cm$^3$) | Cycle maintaining rate (-) | High-temperature storage expansion rate (-) |
|---|---|---|---|
| Embodiment 1 | 4.10 | 95% | 10% |
| Embodiment 2 | 4.08 | 93% | 13% |
| Embodiment 3 | 4.10 | 95% | 10% |
| Embodiment 4 | 4.07 | 95% | 9% |
| Embodiment 5 | 4.08 | 93% | 14% |
| Embodiment 6 | 4.08 | 95% | 11% |
| Embodiment 7 | 4.09 | 94% | 9% |
| Embodiment 8 | 4.09 | 94% | 12% |
| Embodiment 9 | 4.08 | 94% | 14% |
| Embodiment 10 | 4.05 | 94% | 17% |
| Embodiment 11 | 4.09 | 97% | 8% |
| Comparative example 1 | 4.00 | 84% | 26% |
| Comparative example 2 | 3.95 | 88% | 20% |
| Comparative example 3 | 3.40 | 83% | 30% |

As shown in Table 1, in embodiments 1 to 6 of the present application, by turning up the particle size distribution of the lithium cobalt oxide to the lithium and nickel composite oxide, the ratio of the peak value of the first peak to the full width at half maximum of the first peak and the ratio of the peak value of the second peak to the full width at half maximum of the second peak of the cathode material after the laser particle size test can be controlled. The ratio of the peak value of the first peak to the full width at half maximum of the first peak is in positive correlation to the particle size distribution of the lithium cobalt oxide. The ratio of the peak value of the second peak to the full width at half maximum of the second peak is in positive correlation to the particle size distribution of the lithium and nickel composite oxide. In the ranges of the ratio of the peak value of the first peak to the full width at half maximum of the first peak and the ratio of the peak value of the second peak to the full width at half maximum of the second peak of the embodiments of the present application, existence of micro powder can be effectively reduced, and the limiting compacted density is improved. By regulating the proportion of the lithium cobalt oxide or the lithium and nickel composite oxide, the ratio of the peak value of the first peak to the full width at half maximum of the first peak and the ratio of the peak value of the second peak to the full width at half maximum of the second peak of the cathode material after the laser particle size test can be regulated.

It can be known from Table 1 and Table 2 that compared with comparative examples 1 to 3, embodiments 1 to 11 of the present application realize obvious improvement of the lithium-ion batteries with the cathode material of the present application in aspects of the cycle performance and the storage performance. Specifically, it can be known from comparison of comparative examples 1 to 3 and embodiments 1 to 11 that the limiting compacted densities of the cathodes with the cathode material of the present application are all higher than 4.05 g/cm$^3$, the cycle maintaining rate higher than 93% can be effectively maintained in the cycle test, and additionally, the high-temperature expansion rates are obviously reduced in the storage expansion rate test. The results show that the cathode material of the present application can effectively improve the compacted density of the cathode through the specific particle size distribution, the cycle performance of the lithium-ion batteries is improved, and gas produced by the cathode material in high-temperature storage is reduced.

Additionally, it can be known from embodiment 11 that the cathode material with a coating layer has better cycle performance and a lower high-temperature storage expansion rate. The coating layer can properly isolate contact between the surface of the cathode material and an electrolytic solution and can inhibit side reaction between the surface of the cathode material and the electrolytic solution, thereby improving surface stability of the cathode material. Through the comparison on the embodiments and the comparative examples, it can be clearly understood that the cathode material of the present application can realize the obvious improvement of the compacted density and the cycle performance of the electrochemical device by controlling the particle size distribution of the lithium cobalt oxide and the lithium and nickel composite oxide. Meanwhile, the cathode material of the present application can realize sintering temperature reduction in the sintering process by doping Sr in the lithium cobalt oxide and the lithium and nickel composite oxide, so that the content of micro powder in the cathode material reaches minimum, and gaps between big particles can be effectively filled with fine and small particles of the cathode in the electrochemical device, thereby reducing gas produced through fast reaction between the cathode material and the electrolytic solution at a high temperature and improving high-temperature stability of the electrochemical device. Therefore, the cathode prepared from the cathode material of the present application has ultrahigh energy density and cycle stability.

Throughout the specification, references to "embodiment", "part of embodiments", "one embodiment", "another example", "example", "specific example" or "part of examples" mean that at least one embodiment or example of the present application includes specific features, structures, materials or characteristics described in the embodiment or example. Therefore, the descriptions appear throughout the specification, such as "in some embodiments," "in an embodiment," "in one embodiment," "in another example," "in an example," "in a particular example" or "for example," are not necessarily the same embodiment or example in the application. Furthermore, the specific features, structures, materials or characteristics in the descriptions can be combined in any suitable manner in one or more embodiments or examples.

Although the illustrative embodiments have been shown and described, it should be understood by those skilled in the art that the above embodiments cannot be interpreted as limitations to the present application, and the embodiments can be changed, substituted and modified without departing from the spirit, principle and scope of the present application.

**Claims**

1. A cathode material, comprising:

   a lithium cobalt oxide; and
   a lithium and nickel composite oxide, wherein
   a volume distribution curve of particles of the cathode material meets the following conditions:
   the volume distribution curve of the particles of the cathode material comprises a first peak and a second peak, and a particle size value at the first peak is greater than a particle size value at the second peak, wherein a ratio of a peak value of the first peak to a full width at half maximum of the first peak is 1 mm$^{-1}$ to 4 mm$^{-1}$, and a ratio of a peak value of the second peak to a full width at half maximum of the second peak is 6 mm$^{-1}$ to 10 mm$^{-1}$

2. The cathode material according to claim 1, further comprising strontium, wherein a weight of strontium in the cathode material is 1% to 6% based on a total weight of the cathode material.

3. The cathode material according to claim 2, wherein

   the lithium cobalt oxide is at least one of compounds expressed by a general formula $Li_xCo_yM1_zSr_aO_2$, wherein $0.95 \leq x \leq 1.05$, $0.9 \leq y < 1$, $0 \leq z \leq 0.1$, $0.02 \leq a \leq 0.1$, $y+z+a=1$, and M1 is an element selected from the group consisting of Sc, V, Cr, Mn, Fe, Cu, Zn, Y, Zr, Nb, Mo, Tc, Ru, Rh, Pd, Ag, Cd, La, Ce, Pr, Nd, Pm, Sm, Eu, Gd, Tb, Dy, Ho, Er, Tm, Yb, Lu, Al, Mg, Ti, Zr and combinations thereof; and
   the lithium and nickel composite oxide is at least one of compounds expressed by a general formula $Li_uNi_vM2_wN_bSr_cO_2$, wherein $0.95 \leq u \leq 1.05$, $0.3 \leq v < 1$, $0 < w \leq 0.5$, $0 \leq b \leq 0.1$, $0.01 \leq c \leq 0.04$, $v+w+b+c=1$, M2 is an element selected from the group consisting of Co, Mn, Al, Sc, V, Cr, Fe, Cu, Zn, Y, Zr, Nb, Mo, Tc, Ru, Rh, Pd, Ag, Cd, La, Ce, Pr, Nd, Pm, Sm, Eu, Gd, Tb, Dy, Ho, Er, Tm, Yb, Lu and combinations thereof, and N is an element selected from the group consisting of Mg, Ti, Zr and combinations thereof.

4. The cathode material according to claim 2 or 3, wherein a molar content of strontium in the lithium cobalt oxide is greater than a molar content of strontium in the lithium and nickel composite oxide.

5. The cathode material according to any one of claims 1 to 3, wherein a particle size Dv50 of the lithium cobalt oxide is 8 μm to 20 μm, and a particle size Dv50 of the lithium and nickel composite oxide is 3 μm to 18 μm.

6. The cathode material according to any one of claims 1-3, wherein a ratio of a valley value of a peak valley between the first peak and the second peak to a crest value of the second peak is 0.1 to 0.9.

7. The cathode material according to any one of claims 1 to 3, wherein a ratio of the peak value of the first peak to the full width at half maximum of the first peak is 2 mm$^{-1}$ to 3 mm$^{-1}$, and a ratio of the peak value of the second peak to the full width at half maximum of the second peak is 7 mm$^{-1}$ to 9 mm$^{-1}$

8. The cathode material according to any one of claims 1 to 3, wherein a specific surface area of the cathode material is 0.4 m$^2$/g to 0.8 m$^2$/g.

9. The cathode material according to any one of claims 1 to 3, wherein the cathode material further comprises a coating layer, and the coating layer comprises at least one element selected from the group consisting of B, Al, Zr, C and S.

10. An electrochemical device, comprising:

an anode;
a separator; and
a cathode, wherein the cathode comprises the cathode material according to any one of claims 1 to 9.

11. An electronic device, comprising the electrochemical device according to claim 10.

FIG. 1

<div align="center">INTERNATIONAL SEARCH REPORT</div>

| International application No. |
|---|
| **PCT/CN2020/080693** |

**A. CLASSIFICATION OF SUBJECT MATTER**

H01M 4/36(2006.01)i; H01M 4/525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; WOTXT; EPTXT; USTXT; CNKI: 锂, 镍, 钴, 粒径, 粒度, 分布, 曲线, lithium, nickel, cobalt, particle diameter, particle size, distribution, curve

**C. DOCUMENTS CONSIDERED TO BE RELEVANT**

| Category* | Citation of document, with indication, where appropriate, of the relevant passages | Relevant to claim No. |
|---|---|---|
| Y | CN 101901906 A (DONGGUAN AMPEREX TECHNOLOGY LIMITED) 01 December 2010 (2010-12-01)<br>description, paragraphs 2, 6-113 | 1-11 |
| Y | US 2014045044 A1 (SANYO ELECTRIC CO., LTD.) 13 February 2014 (2014-02-13)<br>description, paragraphs 6-8, 17-35, 39-49 | 1-11 |
| Y | CN 101901907 A (DONGGUAN AMPEREX TECHNOLOGY LIMITED) 01 December 2010 (2010-12-01)<br>description, paragraphs 2, 6-131 | 1-11 |
| Y | CN 102569722 A (NINGDE AMPEREX TECHNOLOGY LTD.) 11 July 2012 (2012-07-11)<br>description, paragraphs 2, 8-77 | 1-11 |
| Y | CN 107068952 A (CHINA AUTOMOTIVE BATTERY RESEARCH INSTITUTE CO., LTD.) 18 August 2017 (2017-08-18)<br>description, paragraphs 13-23 | 1-11 |
| A | CN 1855588 A (SAMSUNG SDI CO., LTD.) 01 November 2006 (2006-11-01)<br>entire document | 1-11 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 October 2020** | **28 October 2020** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2020/080693** |

**C.    DOCUMENTS CONSIDERED TO BE RELEVANT**

| Category* | Citation of document, with indication, where appropriate, of the relevant passages | Relevant to claim No. |
|---|---|---|
| A | CN 107978744 A (WUXI CITY PRODUCT QUALITY SUPERVISION AND INSPECTION INSTITUTE) 01 May 2018 (2018-05-01)<br>      entire document | 1-11 |

Form PCT/ISA/210 (second sheet) (January 2015)

**INTERNATIONAL SEARCH REPORT**
Information on patent family members

International application No.

**PCT/CN2020/080693**

| Patent document cited in search report | | | Publication date (day/month/year) | Patent family member(s) | | | Publication date (day/month/year) |
|---|---|---|---|---|---|---|---|
| CN | 101901906 | A | 01 December 2010 | | None | | |
| US | 2014045044 | A1 | 13 February 2014 | JP | 2014035893 | A | 24 February 2014 |
| | | | | US | 9391343 | B2 | 12 July 2016 |
| CN | 101901907 | A | 01 December 2010 | CN | 101901907 | B | 16 October 2013 |
| CN | 102569722 | A | 11 July 2012 | CN | 102569722 | B | 07 September 2016 |
| CN | 107068952 | A | 18 August 2017 | | None | | |
| CN | 1855588 | A | 01 November 2006 | US | 8691445 | B2 | 08 April 2014 |
| | | | | KR | 20060112823 | A | 02 November 2006 |
| | | | | US | 2014154580 | A1 | 05 June 2014 |
| | | | | CN | 100438147 | C | 26 November 2008 |
| | | | | US | 2006263691 | A1 | 23 November 2006 |
| | | | | US | 9786904 | B2 | 10 October 2017 |
| | | | | KR | 100670507 | B1 | 16 January 2007 |
| | | | | JP | 2006310311 | A | 09 November 2006 |
| | | | | JP | 4714072 | B2 | 29 June 2011 |
| CN | 107978744 | A | 01 May 2018 | CN | 107978744 | B | 12 June 2020 |

Form PCT/ISA/210 (patent family annex) (January 2015)